# EUROPÄISCHE PATENTSCHRIFT

(11) **EP 3 963 128 B1**
(45) Veröffentlichungstag und Bekanntmachung des Hinweises auf die Patenterteilung: **27.03.2024**
(21) Anmeldenummer: 20724018.5
(22) Anmeldetag: 29.04.2020
(51) Int. Cl.: G06F 3/048, H04L 12/28, G08C 17/02, H04Q 9/00, A47L 15/42, F24C 7/08, F24C 15/20, F25D 29/00

(54) **VERFAHREN UND EINRICHTUNG ZUM BETREIBEN EINES HAUSHALTSGERÄTS UND SYSTEM MIT EINEM HAUSHALTSGERÄT**
METHOD AND DEVICE FOR OPERATING A DOMESTIC APPLIANCE AND SYSTEM HAVING A DOMESTIC APPLIANCE
PROCÉDÉ ET DISPOSITIF DE FONCTIONNEMENT D'UN APPAREIL MÉNAGER ET SYSTÈME COMPRENANT UN APPAREIL MÉNAGER

(30) Priorität: 03.05.2019 DE 102019206337
(43) Veröffentlichungstag der Anmeldung: 09.03.2022
(73) Patentinhaber: BSH Hausgeräte GmbH, 81739 München (DE)
(72) Erfinder: SCHUMACHER, Frank, 80337 München (DE); HARRER, Sabine, 85129 Oberdolling (DE); SCHMIDT, Tobias, 81371 München (DE); BELIVEAU, Thomas Eric, 80798 München (DE); SCHÖNFUSS, Katja, 81677 München (DE)
(86) Internationale Anmeldenummer: PCT/EP2020/061900
(87) Internationale Veröffentlichungsnummer: WO 2020/225054

(56) Entgegenhaltungen:
- DE-A1-102013 205 760
- DE-A1-102016 214 477

## Beschreibung

Die vorliegende Erfindung betrifft ein Verfahren gemäß Anspruch 1, ein entsprechendes Computerprogramm gemäß Anspruch 12 und eine Einrichtung zum Betreiben eines Haushaltsgeräts gemäß Anspruch 13 sowie ein System gemäß Anspruch 14 mit einem Haushaltsgerät und einer Einrichtung gemäß Anspruch 13.

Haushaltsgeräte weisen beispielsweise zumindest ein Anzeigeelement mit einer vorbestimmten Eigenschaft auf. Die Eigenschaft kann beispielsweise eine Farbe sein, aber auch als eine Form und/oder ein Symbol ausgebildet sein. Das Anzeigeelement kann ein Display oder Teil eines Displays eines Haushaltsgeräts sein, in welchem eine Temperatur angezeigt werden kann. Zudem umfassen Haushaltsgeräte verschiedene physische Objekte, wie beispielsweise Griffe, Lisenen, Twist-Pads, Rahmen und/oder Dekorelemente, welche in einer bestimmten Farbe, aus einem bestimmten Material und/oder als eine bestimmte Form ausgebildet sind und welche ebenfalls zumindest ein Anzeigeelement aufweisen können.

Die Druckschrift DE 10 2013 205760 A1 offenbart ein Haushaltsgerät, welches eine externe, nutzerzugängliche Datenschnittstelle zur Kommunikation des Haushaltsgeräts mit einer externen, nutzergesteuerten Instanz, eine elektrisch betriebene Anzeigeeinrichtung mit wechselbarer Anzeige mindestens einer Zeichenkette und mindestens einen Speicher zum Speichern von Zeichenketten für die Anzeigeeinrichtung aufweist, wobei das Haushaltsgerät dazu eingerichtet ist, über die externe Datenschnittstelle nutzerinitiiert Zeichenketten von der externen, nutzergesteuerten Instanz zu empfangen und in dem Speicher abzulegen. Die Druckschrift DE 10 2013 205760 A1 offenbart ferner ein System, welches ein Haushaltsgerät und mindestens eine damit datentechnisch gekoppelte externe, nutzergesteuerte Instanz aufweist, sowie ein Computerprogrammprodukt, welches dazu ausgestaltet ist, auf der externen, nutzergesteuerten Instanz abzulaufen. Weiter offenbart die Druckschrift DE 10 2013 205760 A1 ein Verfahren zum Konfigurieren von Zeichenketten eines Haushaltsgeräts zum Anzeigen in einer Anzeigeeinrichtung des Haushaltsgeräts. Vor diesem Hintergrund besteht eine Aufgabe der vorliegenden Erfindung darin, den Betrieb eines Haushaltsgeräts zu verbessern.

Gemäß einem ersten Aspekt wird ein Verfahren zum Betreiben eines Haushaltsgeräts mit einer Anzeigeeinrichtung mit zumindest einem Anzeigeelement umfassend zumindest eine einstellbare Eigenschaft und mit einer Steuerungsvorrichtung zum Ansteuern der Anzeigeeinrichtung vorgeschlagen. Das Verfahren umfasst die Schritte:
a) Erfassen einer Freischaltinformation von einem Objekt mittels eines optischen Sensors einer externen Einrichtung,
b) Verarbeiten der erfassten Freischaltinformation mittels einer Verarbeitungs-Einheit der externen Einrichtung zur Generierung eines Freischaltsignals, und
c) Übertragen des generierten Freischaltsignals zu der Steuerungsvorrichtung zur Freischaltung eines Einstellens der zumindest einen Eigenschaft des Anzeigeelements.

Das vorliegende Verfahren ermöglicht es in vorteilhafter Weise, eine erstmalige Einstellung einer gewünschten Eigenschaft zumindest eines Anzeigeelements mittels des generierten Freischaltsignals durchzuführen. Hierdurch kann ein Benutzer auf eigenen Wunsch zumindest die eine Eigenschaft des Anzeigeelements einstellen und somit sein Haushaltsgerät individualisieren. Dadurch erhöht sich die Bedienbarkeit des Haushaltsgeräts sowie der Komfort für den Benutzer. Durch die einstellbare Eigenschaft wird es ermöglicht, die Eigenschaft oder die Eigenschaften des zumindest einen Anzeigeelements des Haushaltsgeräts optimal an die Eigenschaft eines jeweiligen physischen Objekts des Haushaltsgeräts, wie beispielsweise einem Griff, einer Lisene, einem Twist-Pad, einem Rahmen und/oder einem Dekorelement, anzupassen.

Das Haushaltsgerät ist beispielsweise als ein Gargerät, wie beispielsweise als ein Backofen, als ein Kochfeld, als ein Herd, als ein Dampfgarer, als ein Dampfbackofen und/oder als eine Mikrowelle ausgebildet. Ferner kann das Haushaltsgerät als ein Kältegerät, wie beispielsweise als ein Kühl- und/oder Gefriergerät ausgebildet sein. Weiterhin ist das Haushaltsgerät beispielsweise als eine Kaffeemaschine, als eine Waschmaschine, als ein Waschtrockner, als eine Dunstabzugshaube und/oder als ein Geschirrspüler ausgebildet.

Die Anzeigeeinrichtung ist insbesondere eine technische Vorrichtung, welche zum Anzeigen von Informationen eingerichtet ist. Eine derartige Anzeigeeinrichtung kann ein oder mehrere Anzeigeelemente umfassen.

Das Anzeigeelement ist vorzugsweise als ein TFT-Display (Thin-Film-Transistor-Display), LCD (Liquid Crystal Display), eine LED-Anzeige (Light Emitting Diode), eine OLED-Anzeige (Organic LED), eine Fluoreszenzanzeige und/oder eine Segmentanzeige ausgebildet. Das Anzeigeelement ist vorteilhafterweise selbstleuchtend und/oder umfasst eine Hintergrundbeleuchtung, um eine Ablesbarkeit der Anzeige auch bei ungünstigen Lichtverhältnissen zu ermöglichen. Es kann aber auch ohne eine Hintergrundbeleuchtung betrieben werden. Das Anzeigeelement weist zumindest ein Teilelement auf, wobei die von dem Anzeigeelement umfassten Teilelemente jeweils einzeln ansteuerbar sind. Derartige Teilelemente können als Pixel bezeichnet werden.

Ein Pixel kann zu einem Zeitpunkt genau einen Zustand einnehmen. Bei einem Anzeigeelement, welches zur Darstellung von Farben eingerichtet ist, ist ein Zustand zum Beispiel als eine Farbe angegeben. Umfasst das Anzeigeelement eine Hintergrundbeleuchtung und/oder ist selbstleuchtend, kann der Zustand zusätzlich einen Helligkeitswert umfassen. Der Zustand kann beispielsweise als ein Vektor in einem dreidimensionalen Farbraum, wie einem RGB-Farbraum (Rot-Grün-Blau), in eindeutiger Weise dargestellt werden. Ein Anzeigeelement umfasst vorteilhaft eine große Zahl an Pixeln, wobei die einzelnen Pixel sehr kleine Abmessungen aufweisen, besonders vorteilhaft sind die Pixel so klein, dass sie von einem Benutzer nicht als einzelne Pixel wahrgenommen werden. Ein solches Anzeigeelement ist dazu geeignet, eine komplexe graphische Darstellung anzuzeigen. Darüber hinaus kann auch ein Umgebungslicht (engl. "Ambient Light") eines Haushaltsgeräts, wie beispielsweise eine LED-Beleuchtung in einer Haube des Haushaltsgeräts oder in einer Bühne einer Kaffeemaschine, farbig abgestimmt werden.

Die Steuerungsvorrichtung ist insbesondere dazu eingerichtet, die Anzeigeeinrichtung mittels eines Steuerbefehls anzusteuern. Die Steuerungsvorrichtung kann auch ein oder mehrere Anzeigeelemente des Haushaltsgeräts direkt mittels eines Steuerbefehls ansteuern.

Vorzugsweise ist die Steuerungsvorrichtung ferner dazu eingerichtet, das Freischaltsignal zu empfangen, zu verarbeiten und daraufhin in Abhängigkeit des empfangenen und verarbeiteten Freischaltsignals eine Einstellung der zumindest einen Eigenschaft des Anzeigeelements durchzuführen. Zusätzlich ist die Steuerungsvorrichtung des Haushaltsgeräts insbesondere zur Ansteuerung oder zum Steuern verschiedener Funktionen des Haushaltsgeräts, wie beispielsweise einem Spülen, einem Waschen, einem Aufheizen, einem Reinigen und/oder einem Trocknen, eingerichtet.

Ein Objekt ist insbesondere ein physisches Objekt, wie ein Griff, eine Lisene, ein Twist-Pad, ein Rahmen und/oder ein Dekorelement eines Haushaltsgeräts oder für ein Haushaltsgerät. Auch kann das physische Objekt ein Zubehörteil für das Haushaltsgerät sein, welches an oder in dem Haushaltsgerät angebracht wird und welches spezifisch für das jeweilige Haushaltsgerät ist. Zubehörteile umfassen Teile, welche als Zubehör für ein Haushaltsgerät erworben werden können, wie beispielsweise ein Weinglashalter, ein Geschirrkorb und/oder ein Backblech.

Die Freischaltinformation umfasst insbesondere Informationen, welche angeben, dass die zumindest eine Eigenschaft zum Einstellen des Anzeigeelements freigeschalten ist, also die Erlaubnis des Einstellens der Eigenschaft des Anzeigeelements des Haushaltsgeräts.

Vorzugsweise wird unter Verwendung der Freischaltinformation das Freischaltsignal generiert. Das generierte Freischaltsignal umfasst insbesondere Einstellinformationen, welche Informationen aufweisen, die angeben, welche Eigenschaft oder Eigenschaften zum Einstellen des Anzeigeelements ausgewählt werden und wie die Eigenschaft oder die Eigenschaften ausgebildet sind. Die Einstellinformationen werden beispielsweise durch den Benutzer unter Verwendung der Verarbeitungs-Einheit selbstständig festgelegt oder werden automatisch mittels der Verarbeitungs-Einheit in Abhängigkeit der erfassten Freischaltinformation festgelegt.

Das Freischaltsignal ist insbesondere als ein Funksignal ausgebildet, welches von der externen Einrichtung zu der Steuerungsvorrichtung übermittelt wird. Das Funksignal oder auch Radiosignal, ist ein durch Funkwellen ausgesandtes Zeichen oder eine Zeichenfolge zur drahtlosen Übermittlung von Nachrichten.

Die Verarbeitungs-Einheit ist insbesondere auf der externen Einrichtung installiert und/oder ist dazu eingerichtet, auf der externen Einrichtung zu operieren.

Die externe Einrichtung mit dem optischen Sensor wird von dem Benutzer insbesondere derart gehalten oder angeordnet, dass der optische Sensor die Freischaltinformation erfassen kann. Das ist beispielsweise erfüllt, wenn eine Sichtlinie von der Freischaltinformation zu dem optischen Sensor vorhanden ist.

Gemäß einer Ausführungsform wird eine Kamera als der optische Sensor zum Erfassen der Freischaltinformation verwendet, wobei die Freischaltinformation auf dem Objekt oder auf einer Verpackung des Objekts angeordnet ist.

Das Objekt ist, wie oben erläutert, insbesondere ein physisches Objekt, wie beispielsweise ein Griff. Dabei kann der Griff selbst die Freischaltinformation umfassen, damit diese mit der Kamera erfasst werden kann. Auch kann der Griff in einer Verpackung untergebracht sein, das heißt, verpackt sein. Die Freischaltinformation kann auch in der Verpackung auf einem Element, welches extern zu dem Griff ausgebildet ist, angeordnet sein. Vorzugsweise ist die Freischaltinformation an der Verpackung angebracht.

Der optische Sensor ist insbesondere als ein optoelektronischer Sensor ausgebildet. Der optische Sensor umfasst eine Kamera, insbesondere eine Digitalkamera, beispielsweise mit einem CCD-Sensor (CCD: Charged Coupled Device). Die Kamera erfasst beispielsweise ein Bild der Freischaltinformation. Auch kann eine externe Kamera mit der externen Einrichtung gekoppelt werden, um die Freischaltinformation mittels der externen Kamera zu erfassen. Die externe Einrichtung umfasst insbesondere die Kamera.

Auch kann mittels einer Augmented-Reality-Brille, welche der Benutzer verwendet, die Freischaltinformation durch den zumindest einen optischen Sensor der Augmented-Reality-Brille erfasst werden.

Gemäß einer weiteren Ausführungsform umfasst die einstellbare Eigenschaft des Anzeigeelements eine Einstellung zumindest eines Farbtons, zumindest einer Farbsättigung und/oder zumindest einer Helligkeit einer Farbe und/oder die Einstellung einer farblich vorbestimmten Themenwelt und/oder die Einstellung zumindest eines Symbols, welche in dem Anzeigeelement dargestellt werden.

Durch die einstellbare Eigenschaft, welche mittels des Freischaltsignals freigeschaltet wird, ist es möglich, beispielsweise die Farbe eines oder mehrerer Anzeigeelemente auf die Farbe und/oder das Design des zumindest einen physischen Objekts des Haushaltsgeräts anzupassen und optisch optimal aufeinander abzustimmen.

Dadurch kann in vorteilhafter Weise die Farbe eines Anzeigeelements des Haushaltsgeräts an die Farbe und/oder eine Materialität des Objekts und/oder des Zubehörteiles und/oder an die Farbe des Anzeigeelements des Objekts und/oder des Zubehörteiles durch Freischalten des Einstellens der Farbe des Anzeigeelements, was einem Einstellen der Eigenschaft des Anzeigeelements entspricht, angepasst werden. Die Farbe des Anzeigeelements des Haushaltsgeräts kann auch an mehrere Zubehörteile oder Objekte des Haushaltsgeräts angepasst werden. Das Zubehörteil und/oder das Objekt wird insbesondere zeitgleich mit dem Erwerben des Haushaltsgeräts erworben. Auch können das Zubehörteil und/oder das Objekt später zugekauft werden. Zudem können die Objekte selbst zumindest ein Anzeigeelement aufweisen, bei welchem ebenfalls eine Einstellung einer Eigenschaft vorgenommen werden kann, damit das Anzeigeelement des Objekts zu dem Anzeigeelement des Haushaltsgeräts passt.

Mittels der Einstellinformationen, die insbesondere in dem generierten Freischaltsignal enthalten sind, kann der Benutzer vorzugsweise über die Verarbeitungs-Einheit angeben, welche Eigenschaft oder Eigenschaften zum Einstellen des Anzeigeelements ausgewählt werden, wie beispielsweise eine Farbe, und wie die Eigenschaft oder die Eigenschaften ausgebildet sind, also beispielsweise welche Farbsättigung oder welche Helligkeit die Farbe aufweist. Diese Einstellinformationen werden insbesondere mittels des Freischaltsignals zu der Steuerungsvorrichtung übermittelt. Somit kann die Farbe des Anzeigeelements des Haushaltsgeräts und/oder des Objekts in Abhängigkeit der Einstellinformationen angezeigt werden.

Beispielsweise ist das Anzeigeelement des Haushaltsgeräts in einer oder als Teil einer Themenwelt ausgebildet. Unter einer Themenwelt wird vorliegend eine farblich vorbestimmte Themenwelt verstanden. Insbesondere weist die farblich vorbestimmte Themenwelt eines Displays eines Haushaltsgeräts eine Eigenschaft, wie ein Farbambiente, auf. Das Farbambiente einer farblich vorbestimmten Themenwelt oder eines Anzeigeelements umfasst insbesondere einen vorbestimmten Farbton, eine vorbestimmte Farbsättigung und/oder eine vorbestimmte Helligkeit der Farbe. Durch das vorliegende Verfahren wird eine Freischaltung des Einstellens des Farbambientes ermöglicht. Dabei werden durch das Erfassen der Freischaltinformation beispielsweise mehrere verschiedene Farbambiente zum Einstellen der Themenwelt des Displays freigeschalten. Beispielsweise kann die Themenwelt ein blaues, grünes, oranges und/oder kupferfarbiges Farbambiente umfassen. Das Farbambiente der Themenwelt wird insbesondere in Abhängigkeit der Farbe und/oder der Materialität des Zubehörteils und/oder des Objekts festgelegt.

Die Themenwelt, welche auf dem Display oder dem Anzeigeelement des Haushaltsgeräts angezeigt wird, kann verschiedene Teilabschnitte umfassen. Dabei sind die von der Themenwelt umfassten Teilabschnitte vorzugsweise jeweils einzeln ansteuerbar. Derartige Teilabschnitte können als Pixel ausgebildet sein. Die Pixel der verschiedenen Teilabschnitte sind vorzugsweise unterschiedlich ausgebildet, dies bedeutet, dass zumindest zwei Pixel unterschiedliche Farbhelligkeiten einer Farbe aufweisen.

Zusätzlich kann die Themenwelt ein oder mehrere Symbole umfassen, welche beispielsweise den Heiztyp oder die Heiztemperatur eines Haushaltsgeräts, wie einem Backofen, anzeigen. Das durch die Themenwelt oder das Anzeigeelement dargestellte Symbol kann unterschiedliche geometrische Formen, wie beispielsweise rechteckige oder quadratische Formen, umfassen. Ferner können mittels der Themenwelt eine Programmeinstellung und/oder ein Rezept dargestellt werden, welche in einem bestimmten Farbambiente durch das Freischalten mittels des Freischaltsignals einstellbar sind.

Gemäß einer weiteren Ausführungsform wird das generierte Freischaltsignal zu einem initialen Freischalten oder zu einem wiederholten Freischalten des Einstellens oder zum Einstellen der zumindest einen Eigenschaft des Anzeigeelements verwendet.

Unter einem initialen Freischalten der zumindest einen Eigenschaft des Anzeigeelements wird vorliegend insbesondere verstanden, dass das Einstellen der zumindest einen Eigenschaft des Anzeigeelements erstmalig in Abhängigkeit des generierten Freischaltsignals freigeschalten wird. Somit ist die Möglichkeit des Einstellens der zumindest einen Eigenschaft des Anzeigeelements erstmalig gegeben.

Auch gibt es insbesondere ein wiederholtes Freischalten des Einstellens. Dies ist dann der Fall, wenn beispielsweise ein Abonnement über eine Einstellung einer Eigenschaft, insbesondere über eine Mehrzahl an unterschiedlichen Eigenschaften des Anzeigeelements, erworben wird. Nach dem zeitlichen Ende und somit dem Ablauf des Abonnements steht das Einstellen der jeden Eigenschaften nicht länger zur Verfügung. Bei Wiederaufnahme oder Wiedereintritt in das Abonnement wird insbesondere das wiederholte Freischalten des Einstellens durchgeführt.

Vorzugsweise kann jederzeit nach dem initialen Freischalten durch den Benutzer mittels der externen Einrichtung und/oder an dem Haushaltsgerät selbst durch den Benutzer eine (erneute) Einstellung der Eigenschaft vorgenommen werden. Bei diesem erneuten Einstellen und/oder Verändern der Eigenschaft des Anzeigeelements wird beispielsweise ein anderer Farbton für das Anzeigeelement ausgewählt.

Gemäß einer weiteren Ausführungsform weist das generierte Freischaltsignal eine bestimmte Gültigkeit auf, wobei die bestimmte Gültigkeit eine unbegrenzte Gültigkeit oder eine begrenzte Gültigkeit umfasst.

Unter einer begrenzten Gültigkeit wird insbesondere eine zeitlich begrenzte Gültigkeit verstanden. Dies ist dann der Fall, wenn beispielsweise ein Abonnement mit einer zeitlich begrenzten Gültigkeit für das Einstellen der Eigenschaft abgeschlossen wird. Jedoch ist es für den Benutzer möglich, durch das Abonnement regelmäßig neue Updates und Editionen für die Eigenschaft des Anzeigeelements zu erhalten. Editionen werden insbesondere auch unabhängig von einem Abonnement, wie beispielsweise regional oder saisonal, freigeschaltet.

Unter einer unbegrenzten Gültigkeit wird insbesondere eine zeitlich unbegrenzte Gültigkeit verstanden. Dies ist dann der Fall, wenn beispielsweise das Objekt, das Zubehörteil und/oder die Verpackung, welches die Freischaltinformation aufweist, durch den Benutzer erworben wird.

Die bestimmte Gültigkeit des generierten Freischaltsignals wird insbesondere mittels einer Internetverbindung von der externen Einrichtung zu einem Server des Herstellers überprüft. Dabei wird insbesondere mittels des Servers des Herstellers die bestimmte Gültigkeit des generierten Freischaltsignals geprüft. Das Prüfen der bestimmten Gültigkeit umfasst beispielsweise ein Überprüfen, ob die Freischaltinformation beispielsweise durch einen anderen Benutzer bereits verwendet wird oder wurde.

Gemäß einer weiteren Ausführungsform wird das Übertragen des generierten Freischaltsignals zu der Steuerungsvorrichtung in Schritt c) mittels einer Kommunikationsschnittstelle des Haushaltsgeräts durchgeführt.

Gemäß einer weiteren Ausführungsform umfasst die Kommunikationsschnittstelle ein Funkmodul, welches mit der Steuerungsvorrichtung zum Übertragen von Daten zwischen dem Haushaltsgerät und der externen Einrichtung gekoppelt wird.

Das Funkmodul ist insbesondere ein WiFi-Funkmodul, welches als WiFi-Client oder als WiFi-Access-Point einsetzbar ist. Das Funkmodul des vorliegenden Haushaltsgeräts ist insbesondere zur Übertragung von Funksignalen mit der externen Einrichtung eingerichtet. Das Funkmodul umfasst ferner vorzugsweise eine Sende- und Empfangseinheit zur Übertragung von Daten zwischen dem Haushaltsgerät und der externen Einrichtung. Das generierte Freischaltsignal wird insbesondere als ein Funksignal von der externen Einrichtung über das gekoppelte Funkmodul zu der Steuerungsvorrichtung übertragen.

Das Funkmodul ist vorzugsweise zum bidirektionalen Austausch von Funksignalen zwischen der externen Einrichtung und dem Haushaltsgerät eingerichtet. Folglich kann das Funkmodul Funksignale an die externe Einrichtung senden und auch Funksignale von der externen Einrichtung empfangen.

Gemäß einer weiteren Ausführungsform umfasst die Kommunikationsschnittstelle ein Netzwerkmodul, welches mit der Steuerungsvorrichtung gekoppelt wird, wobei mittels der externen Einrichtung das Freischaltsignal zu einem Server übertragen wird und das Haushaltsgerät mittels des Netzwerkmoduls das Freischaltsignal von dem Server empfängt.

Hierbei wird das generierte Freischaltsignal insbesondere als ein Funksignal von der externen Einrichtung zu einer Netzwerkeinrichtung übertragen. Der Server ist insbesondere dem Hersteller des Haushaltsgeräts zugeordnet.

Bei der Übertragung des generierten Freischaltsignals mittels eines drahtlosen lokalen Netzwerks (WLAN: Wireless Local Area Network) oder per Bluetooth von der externen Einrichtung zu der Netzwerkeinrichtung ist die Netzwerkeinrichtung beispielsweise als ein Router ausgebildet.

Die Übertragung des generierten Freischaltsignals kann insbesondere in Form eines Funksignals direkt über ein Mobilfunknetzwerk zu dem Server übertragen werden. Der Router, also die Netzwerkeinrichtung, ist vorzugsweise mit dem Server verbunden.

Das Netzwerkmodul des Haushaltsgeräts ist insbesondere mit der Netzwerkeinrichtung, also dem Router, einem Intranet oder Internet und/oder mit dem Server des Herstellers und/oder einem weiteren Server verbunden. Beispielsweise können über den Server und die externe Einrichtung Daten auf das Haushaltsgerät geladen werden. Die Verbindung des Netzwerkmoduls zu dem Router, dem Intranet oder Internet und/oder dem Server des Herstellers ist vorzugsweise drahtgebunden, wie mittels Kupferleiter, optischer Leiter, einer Powerline-Infrastruktur, und/oder drahtlos und/oder als ein weiteres drahtloses oder drahtgebundenes Datennetzwerk ausgebildet.

Gemäß einer weiteren Ausführungsform umfasst die externe Einrichtung ein mobiles Endgerät eines Benutzers, wobei die Verarbeitung der erfassten Freischaltinformation und die Einstellung der zumindest einen Eigenschaft durch den Benutzer mittels der auf dem mobilen Endgerät laufenden und als eine Applikation ausgebildeten Verarbeitungs-Einheit durchgeführt werden.

Die externe Einrichtung ist insbesondere ein mobiles Endgerät. Das mobile Endgerät ist beispielsweise ein Smartphone, ein Mobiltelefon, ein Tablet oder ein Tablet-Computer. Das mobile Endgerät umfasst zumindest eine Kamera, die als der optische Sensor dient. Dabei kann der Benutzer selbst die Aufnahme für das Erfassen der Freischaltinformation durchführen. Die externe Einrichtung ist insbesondere zum Betreiben des Haushaltsgeräts eingerichtet.

Die Verarbeitungs-Einheit ist insbesondere als eine Applikation (App) ausgebildet. Die Applikation auf dem mobilen Endgerät umfasst insbesondere graphische Darstellungen. Der Benutzer kann unter Verwendung der Applikation die zumindest eine Eigenschaft des Anzeigeelements freischalten und einstellen. Beispielsweise kann die erfasste Freischaltinformation mittels der Verarbeitungs-Einheit verarbeitet werden. Unter einem Verarbeiten wird vorliegend insbesondere verstanden, dass die erfasste Freischaltinformation zu einem Server übermittelt wird und nach einer Überprüfung des Servers und einer Zulässigkeit der erfassten Freischaltinformation diese zur Generierung des Freischaltsignals verwendet wird. Anschließend wird insbesondere das generierte und zulässige Freischaltsignal weiter übertragen und verarbeitet. Die Verarbeitungs-Einheit ist insbesondere dazu eingerichtet, die erfasste Freischaltinformation zu verarbeiten und abhängig davon ein Freischaltsignal zu generieren.

Insbesondere kann über die Applikation eine Vorschau der zukünftigen Einstellung der Eigenschaft des Anzeigeelements des Haushaltsgeräts angezeigt werden. Dies hat den Vorteil, dass dem Benutzer vor einem Kauf des gewünschten Haushaltsgeräts und/oder Objekts die Einstellung der Eigenschaft des Anzeigeelements visualisiert werden kann. Basierend auf der Visualisierung kann der Benutzer seine Kaufentscheidung in Bezug auf das Haushaltsgerät und/oder das Objekt treffen. Die Einstellung der Eigenschaft des Anzeigeelements aus der Vorschau kann dann nach dem Kauf des Haushaltsgeräts und/oder des Objekts an das Haushaltsgerät übertragen werden. Somit sind beispielsweise bereits bei dem Kauf des Haushaltsgeräts verschiedene Eigenschaften zum Einstellen des Anzeigeelements verfügbar.

Gemäß einer weiteren Ausführungsform umfasst die Freischaltinformation einen zweidimensionalen Code, insbesondere einen Quick-Response-Code (QR-Code).

Der QR-Code ist insbesondere an dem Objekt oder der Verpackung des Objekts angeordnet. Das Objekt kann beispielsweise zu einem späteren Zeitpunkt, im Vergleich zu dem Kaufzeitpunkt des Haushaltsgeräts, erworben worden.

Die Verarbeitungs-Einheit umfasst insbesondere das Verarbeiten der erfassten Freischaltinformation. Das Verarbeiten der erfassten Freischaltinformation umfasst vorzugsweise ein Aufnehmen des QR-Codes mittels der Kamera durch den Benutzer, ein Dekodieren des QR-Codes durch die Verarbeitungs-Einheit und ein Generieren des Freischaltsignals durch die Verarbeitungs-Einheit.

Gemäß einer weiteren Ausführungsform umfasst die Freischaltinformation einen Strichcode oder einen Barcode als zweidimensionalen Code.

Gemäß einer weiteren Ausführungsform wird die Kamera als der optische Sensor zum Erfassen des Objekts verwendet, wobei das Objekt mittels einer Objekterkennung identifiziert wird und das Freischaltsignal in Abhängigkeit des erfassten und identifizierten Objekts generiert wird.

Gemäß einer weiteren Ausführungsform ist die einstellbare Eigenschaft durch den Benutzer rücksetzbar. Das Rücksetzen durch den Benutzer erfolgt insbesondere mittels der Verarbeitungs-Einheit oder an dem Haushaltsgerät selbst durch eine Eingabe und/oder eine Einstellung des Benutzers.

Gemäß einem zweiten Aspekt wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Gemäß einem dritten Aspekt wird eine Einrichtung zum Betreiben eines Haushaltsgeräts, welches eine Anzeigeeinrichtung mit zumindest einem Anzeigeelement umfassend zumindest eine einstellbare Eigenschaft und eine Steuerungsvorrichtung zum Ansteuern der Anzeigeeinrichtung aufweist, vorgeschlagen. Dabei ist die Einrichtung extern zu dem Haushaltsgerät und umfasst:
eine Erfassungs-Einheit zum Erfassen einer Freischaltinformation von einem Objekt mittels eines optischen Sensors der externen Einrichtung,
eine Verarbeitungs-Einheit zum Verarbeiten der erfassten Freischaltinformation und zum Generieren eines Freischaltsignals, und
eine Übertragungs-Einheit zum Übertragen des generierten Freischaltsignals zu der Steuerungsvorrichtung zur Freischaltung eines Einstellens der zumindest einen Eigenschaft des Anzeigeelements.

Die jeweilige Einheit, wie die Erfassungs-Einheit oder die Verarbeitungs-Einheit, und/oder die Steuerungsvorrichtung können hardwaretechnisch und/oder auch softwaretechnisch implementiert sein. Bei einer hardwaretechnischen Implementierung kann die jeweilige Einheit und/oder die Steuerungsvorrichtung zum Beispiel als Computer oder als Mikroprozessor ausgebildet sein. Bei einer softwaretechnischen Implementierung können die jeweilige Einheit und/oder die Steuerungsvorrichtung als Computerprogrammprodukt, als eine Funktion, als eine Routine, als Teil eines Programmcodes oder als ausführbares Objekt ausgebildet sein.

Gemäß einem vierten Aspekt wird ein System mit einem Haushaltsgerät und einer zu dem Haushaltsgerät externen Einrichtung gemäß dem dritten Aspekt vorgeschlagen.

Gemäß einer Weiterbildung umfasst das System eine Mehrzahl H von Haushaltsgeräten, mit H ≥ 2. Dabei ist die jeweilige Steuerungsvorrichtung des jeweiligen Haushaltsgeräts der Mehrzahl dazu eingerichtet, mittels des übertragenen Freischaltsignals die zumindest eine Eigenschaft des Anzeigeelements der Mehrzahl von Haushaltsgeräten derart einzustellen, dass die eingestellten Eigenschaften der Anzeigeelemente identisch sind.

Insbesondere ist in einer Küche eine Mehrzahl H von Haushaltsgeräten, mit H ≥ 2, angeordnet. Jedes der Haushaltsgeräte aus der Mehrzahl H umfasst jeweils zumindest ein Anzeigeelement, an welchem eine Eigenschaft eingestellt wird.

Dabei ist es vorteilhaft möglich, dass mittels des Freischaltsignals alle ausgewählten Anzeigeelemente der Haushaltsgeräte in beispielsweise einer Farbe eingestellt werden. Hierbei leuchten insbesondere anschließend alle ausgewählten Anzeigeelemente der Haushaltsgeräte in genau der Farbe, in welcher beispielsweise alle Griffe und/oder alle Rahmen aller Haushaltsgeräte ausgebildet sind. Somit wird durch das Einstellen der Eigenschaft des Anzeigeelements eine einheitliche Anpassung der Anzeigeelemente der Haushaltsgeräte der Küche zu den physischen Objekten der Küche durchgeführt. Dadurch sind die physischen Objekte und die Anzeigeelemente der Haushaltsgeräte der Küche optisch optimal aufeinander abgestimmt.

Die für das vorgeschlagene Verfahren beschriebenen Ausführungsformen und Merkmale gelten für die vorgeschlagene Vorrichtung entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt eine schematische Ansicht eines Ausführungsbeispiels einer Einrichtung zum Betreiben eines Haushaltsgeräts und ein Haushaltsgerät; und
- Fig. 2: zeigt ein schematisches Blockschaltbild eines Ausführungsbeispiels eines Verfahrens zum Betreiben eines Haushaltsgeräts.

In den Figuren sind gleiche oder funktionsgleiche Elemente mit denselben Bezugszeichen versehen worden, sofern nichts anderes angegeben ist.

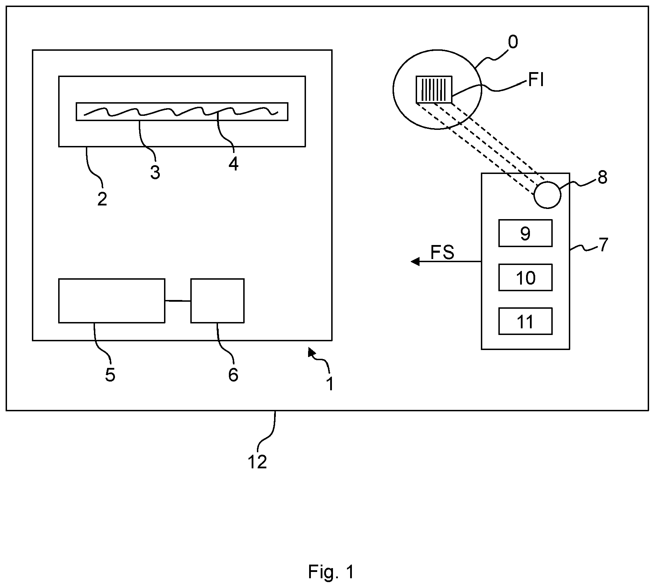

Fig. 1 zeigt eine schematische Ansicht eines Ausführungsbeispiels einer Einrichtung 7 zum Betreiben eines Haushaltsgeräts 1 und ein Haushaltsgerät 1.

Das Haushaltsgerät 1 in Fig. 1 umfasst eine Anzeigeeinrichtung 2 mit zumindest einem Anzeigeelement 3, welches zumindest eine einstellbare Eigenschaft 4 aufweist. Ferner umfasst das Haushaltsgerät 1 eine Steuerungsvorrichtung 5 zum Ansteuern der Anzeigeeinrichtung 2. Die Einrichtung 7 ist in Fig. 1 extern zu dem Haushaltsgerät 1 angeordnet. Die externe Einrichtung 7 weist eine Erfassungs-Einheit 9, eine Verarbeitungs-Einheit 10 und eine Übertragungs-Einheit 11 auf.

Die Erfassungs-Einheit 9 ist dazu eingerichtet, eine Freischaltinformation FI von einem Objekt O mittels eines optischen Sensors 8 der externen Einrichtung 7 zu erfassen.

Weiterhin ist die Verarbeitungs-Einheit 10 dazu eingerichtet, die erfasste Freischaltinformation FI zu verarbeiten und abhängig davon ein Freischaltsignal FS zu generieren.

Die Übertragungs-Einheit 11 ist dazu eingerichtet, das generierte Freischaltsignal FS zu der Steuerungsvorrichtung 5 zur Freischaltung eines Einstellens der zumindest einen Eigenschaft 4 des Anzeigeelements 2 zu übertragen.

Dabei bilden das Haushaltsgerät 1 und die zu dem Haushaltsgerät 1 externe Einrichtung 7 zum Betreiben des Haushaltsgeräts 1 in Fig. 1 ein System 12 aus.

Zusätzlich kann das System 12 eine Mehrzahl H von Haushaltsgeräten 1 umfassen (nicht dargestellt). Hierbei ist die jeweilige Steuerungsvorrichtung 5 des jeweiligen Haushaltsgeräts 1 der Mehrzahl der Haushaltsgeräte 1 dazu eingerichtet, mittels des übertragenen Freischaltsignals FS die zumindest eine Eigenschaft 4 des Anzeigeelements 3 der Mehrzahl von Haushaltsgeräten 1 einzustellen. Die zumindest eine Eigenschaft 4 des Anzeigeelements 3 der Mehrzahl von Haushaltsgeräten 1 wird derart eingestellt, dass die eingestellten Eigenschaften 4 der Anzeigeelemente 3 identisch sind.

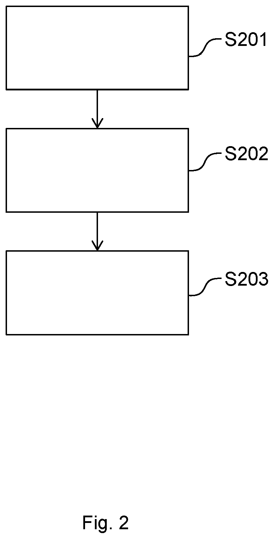

Fig. 2 zeigt ein schematisches Blockschaltbild eines Ausführungsbeispiels eines Verfahrens zum Betreiben eines Haushaltsgeräts 1, wie beispielsweise das Haushaltsgerät 1 der Fig. 1. Das Haushaltsgerät 1 umfasst eine Anzeigeeinrichtung 2 mit zumindest einem Anzeigeelement 3, welches zumindest eine einstellbare Eigenschaft 4 aufweist. Weiterhin umfasst das Haushaltsgerät 1 eine Steuerungsvorrichtung 5 zum Ansteuern der Anzeigeeinrichtung 2.

Das Verfahren der Fig. 2 weist die Schritte S201, S202 und S203 auf:
In Schritt S201 wird eine Freischaltinformation FI von einem Objekt O mittels eines optischen Sensors 8 einer externen Einrichtung 7 erfasst. Dabei wird als der optische Sensor 8 beispielsweise eine Kamera verwendet. Ferner ist die Freischaltinformation FI auf dem Objekt O oder auf einer Verpackung des Objekts O angeordnet. Weiterhin umfasst die Freischaltinformation Fl einen zweidimensionalen Code, insbesondere einen Quick-Response-Code.

Zusätzlich kann das Objekt O mittels einer Objekterkennung identifiziert werden und das Freischaltsignal FS in Abhängigkeit des erfassten und identifizierten Objekts O generiert werden.

In Schritt S202 wird die erfasste Freischaltinformation FI mittels einer Verarbeitungs-Einheit 10 der externen Einrichtung 7 verarbeitet und abhängig davon ein Freischaltsignals FS generiert.

Das generierte Freischaltsignal FS wird hierbei zu einem initialen Freischalten oder zu einem wiederholten Freischalten des Einstellens oder zum Einstellen der zumindest einen Eigenschaft 4 des Anzeigeelements 3 verwendet. Zusätzlich weist das generierte Freischaltsignal FS eine bestimmte Gültigkeit auf. Die bestimmte Gültigkeit umfasst eine unbegrenzte Gültigkeit oder eine begrenzte Gültigkeit.

In Schritt S203 wird das generierte Freischaltsignal FS zu der Steuerungsvorrichtung 5 zur Freischaltung eines Einstellens der zumindest einen Eigenschaft 4 des Anzeigeelements 3 übertragen. Dabei umfasst die einstellbare Eigenschaft 4 des Anzeigeelements 3 eine Einstellung zumindest eines Farbtons, einer Farbsättigung oder einer Helligkeit einer Farbe. Weiterhin weist die einstellbare Eigenschaft 4 des Anzeigeelements 3 eine Einstellung einer farblich vorbestimmten Themenwelt oder die Einstellung zumindest eines Symbols, welche in dem Anzeigeelement 3 dargestellt werden, auf.

Das Übertragen des generierten Freischaltsignals FS in dem Schritt S203 zu der Steuerungsvorrichtung 5 wird mittels einer Kommunikationsschnittstelle 6 des Haushaltsgeräts 1 durchgeführt. Die Kommunikationsschnittstelle 6 umfasst insbesondere ein Funkmodul und/oder ein Netzwerkmodul.

Das Funkmodul kann mit der Steuerungsvorrichtung 5 zum Übertragen von Daten zwischen dem Haushaltsgerät 1 und der externen Einrichtung 7 gekoppelt werden.

Das Netzwerkmodul kann ebenfalls mit der Steuerungsvorrichtung 5 gekoppelt werden. In diesem Fall wird das Freischaltsignal FS mittels der externen Einrichtung 7 zu einem Server übertragen. Im Anschluss empfängt das Haushaltsgerät 1 das Freischaltsignal FS mittels des Netzwerkmoduls von dem Server.

Ferner umfasst die externe Einrichtung 7 ein mobiles Endgerät eines Benutzers. Auf dem mobilen Endgerät des Benutzers läuft insbesondere die als eine Applikation ausgebildete Verarbeitungs-Einheit 10. Dabei werden die Verarbeitung der erfassten Freischaltinformation FI und die Einstellung der zumindest einen Eigenschaft 4 durch den Benutzer mittels der Verarbeitungs-Einheit 10 durchgeführt.

Obwohl die vorliegende Erfindung anhand von Ausführungsbeispielen beschrieben wurde, ist sie vielfältig modifizierbar.

### Verwendete Bezugszeichen:

- 1: Haushaltsgerät
- 2: Anzeigeeinrichtung
- 3: Anzeigeelement
- 4: (einstellbare) Eigenschaft
- 5: Steuerungsvorrichtung
- 6: Kommunikationsschnittstelle
- 7: externe Einrichtung
- 8: optischer Sensor (Kamera)
- 9: Erfassungs-Einheit
- 10: Verarbeitungs-Einheit
- 11: Übertragungs-Einheit
- 12: System
- FI: Freischaltinformation
- FS: Freischaltsignal
- O: Objekt
- S201: Verfahrensschritt
- S202: Verfahrensschritt
- S203: Verfahrensschritt

## Patentansprüche

1. Verfahren zum Betreiben eines Haushaltsgeräts (1) mit einer Anzeigeeinrichtung (2) mit zumindest einem Anzeigeelement (3) umfassend zumindest eine einstellbare Eigenschaft (4) und mit einer Steuerungsvorrichtung (5) zum Ansteuern der Anzeigeeinrichtung (2), **gekennzeichnet durch** die Schritte:
a) Erfassen (S201) einer Freischaltinformation (FI) von einem Objekt (O) mittels eines optischen Sensors (8) einer externen Einrichtung (7),
b) Verarbeiten (S202) der erfassten Freischaltinformation (FI) mittels einer Verarbeitungs-Einheit (10) der externen Einrichtung (7) zur Generierung eines Freischaltsignals (FS), und
c) Übertragen (S203) des generierten Freischaltsignals (FS) zu der Steuerungsvorrichtung (5) zur Freischaltung eines Einstellens der zumindest einen Eigenschaft (4) des Anzeigeelements (3).

2. Verfahren nach Anspruch 1, **dadurch gekennzeichnet, dass** eine Kamera (8) als der optische Sensor (8) zum Erfassen der Freischaltinformation (FI) verwendet wird, wobei die Freischaltinformation (FI) auf dem Objekt (O) oder auf einer Verpackung des Objekts (O) angeordnet ist.

3. Verfahren nach Anspruch 1 oder 2, **dadurch gekennzeichnet, dass** die einstellbare Eigenschaft (4) des Anzeigeelements (3) eine Einstellung zumindest eines Farbtons, zumindest einer Farbsättigung und/oder zumindest einer Helligkeit einer Farbe und/oder die Einstellung einer farblich vorbestimmten Themenwelt und/oder die Einstellung zumindest eines Symbols, welche in dem Anzeigeelement (3) dargestellt werden, umfasst.

4. Verfahren nach einem der Ansprüche 1 bis 3, **dadurch gekennzeichnet, dass** das generierte Freischaltsignal (FS) zu einem initialen Freischalten oder zu einem wiederholten Freischalten des Einstellens oder zum Einstellen der zumindest einen Eigenschaft (4) des Anzeigeelements (3) verwendet wird.

5. Verfahren nach einem der Ansprüche 1 bis 4, **dadurch gekennzeichnet, dass** das generierte Freischaltsignal (FS) eine bestimmte Gültigkeit aufweist, wobei die bestimmte Gültigkeit eine unbegrenzte Gültigkeit oder eine begrenzte Gültigkeit umfasst.

6. Verfahren nach einem der Ansprüche 1 bis 5, **dadurch gekennzeichnet, dass** das Übertragen (S203) des generierten Freischaltsignals (FS) zu der Steuerungsvorrichtung (5) in Schritt c) mittels einer Kommunikationsschnittstelle (6) des Haushaltsgeräts (1) durchgeführt wird.

7. Verfahren nach Anspruch 6, **dadurch gekennzeichnet, dass** die Kommunikationsschnittstelle (6) ein Funkmodul umfasst, welches mit der Steuerungsvorrichtung (5) zum Übertragen von Daten zwischen dem Haushaltsgerät (1) und der externen Einrichtung (7) gekoppelt wird.

8. Verfahren nach Anspruch 6, **dadurch gekennzeichnet, dass** die Kommunikationsschnittstelle (6) ein Netzwerkmodul umfasst, welches mit der Steuerungsvorrichtung (5) gekoppelt wird, wobei mittels der externen Einrichtung (7) das Freischaltsignal (FS) zu einem Server übertragen wird und das Haushaltsgerät (1) mittels des Netzwerkmoduls das Freischaltsignal (FS) von dem Server empfängt.

9. Verfahren nach einem der Ansprüche 1 bis 8, **dadurch gekennzeichnet, dass** die externe Einrichtung (7) ein mobiles Endgerät eines Benutzers umfasst, wobei die Verarbeitung der erfassten Freischaltinformation (FI) und die Einstellung der zumindest einen Eigenschaft (4) durch den Benutzer mittels der auf dem mobilen Endgerät laufenden und als eine Applikation ausgebildeten Verarbeitungs-Einheit (10) durchgeführt werden.

10. Verfahren nach einem der Ansprüche 1 bis 9, **dadurch gekennzeichnet, dass** die Freischaltinformation (FI) einen zweidimensionalen Code, insbesondere einen Quick-Response-Code, umfasst.

11. Verfahren nach einem der Ansprüche 2 bis 10, **dadurch gekennzeichnet, dass** die Kamera (8) als der optische Sensor (8) zum Erfassen des Objekts (O) verwendet wird, wobei das Objekt (O) mittels einer Objekterkennung identifiziert wird und das Freischaltsignal (FS) in Abhängigkeit des erfassten und identifizierten Objekts (O) generiert wird.

12. Computerprogrammprodukt, welches auf einer programmgesteuerten Einrichtung die Durchführung des Verfahrens nach einem der Ansprüche 1 bis 11 veranlasst.

13. Einrichtung (7) zum Betreiben eines Haushaltsgeräts (1), welches eine Anzeigeeinrichtung (2) mit zumindest einem Anzeigeelement (3) umfassend zumindest eine einstellbare Eigenschaft (4) und eine Steuerungsvorrichtung (5) zum Ansteuern der Anzeigeeinrichtung (2) aufweist, wobei die Einrichtung (7) extern zu dem Haushaltsgerät (1) ist und **dadurch gekennzeichnet ist, dass** die Einrichtung (7) umfasst:
eine Erfassungs-Einheit (9) zum Erfassen einer Freischaltinformation (FI) von einem Objekt (O) mittels eines optischen Sensors (8) der externen Einrichtung (7),
eine Verarbeitungs-Einheit (10) zum Verarbeiten der erfassten Freischaltinformation (FI) und zum Generieren eines Freischaltsignals (FS), und
eine Übertragungs-Einheit (11) zum Übertragen des generierten Freischaltsignals (FS) zu der Steuerungsvorrichtung (5) zur Freischaltung eines Einstellens der zumindest einen Eigenschaft (4) des Anzeigeelements (2).

14. System (12) mit einem Haushaltsgerät (1) und einer zu dem Haushaltsgerät (1) externen Einrichtung (7) nach Anspruch 13.

15. System nach Anspruch 14, wobei das System eine Mehrzahl H von Haushaltsgeräten (1) umfasst, mit H ≥ 2, wobei die jeweilige Steuerungsvorrichtung (5) des jeweiligen Haushaltsgeräts (1) der Mehrzahl dazu eingerichtet ist, mittels des übertragenen Freischaltsignals (FS) die zumindest eine Eigenschaft (4) des Anzeigeelements (3) der Mehrzahl von Haushaltsgeräten (1) derart einzustellen, dass die eingestellten Eigenschaften (4) der Anzeigeelemente (3) identisch sind.

## Claims

1. Method for operating a household appliance (1) with a display device (2) having at least one display element (3) comprising at least one adjustable property (4) and having a control apparatus (5) for actuating the display device (2), **characterised by** the steps:
a) detecting (S201) an item of activation information (FI) from an object (O) by means of an optical sensor (8) of an external device (7),
b) processing (S202) the detected item of activation information (FI) by means of a processing unit (10) of the external device (7) in order to generate an activation signal (FS), and
c) transmitting (S203) the generated activation signal (FS) to the control apparatus (5) for activating an adjustment of the at least one property (4) of the display element (3).

2. Method according to claim 1, **characterised in that** a camera (8) is used as the optical sensor (8) for detecting the item of activation information (FI), wherein the item of activation information (FI) is arranged on the object (O) or on a packaging of the object (O).

3. Method according to claim 1 or 2, **characterised in that** the adjustable property (4) of the display element (3) comprises an adjustment of at least one colour tone, at least one colour saturation and/or at least one brightness of a colour and/or the adjustment of a theme world which is predetermined in terms of colour and/or the adjustment of at least one symbol, which are shown in the display element (3).

4. Method according to one of claims 1 to 3, **characterised in that** the generated activation signal (FS) is used to initially activate or repeatedly activate the adjustment or to adjust the at least one property (4) of the display element (3).

5. Method according to one of claims 1 to 4, **characterised in that** the generated activation signal (FS) has a specific validity, wherein the specific validity comprises an unlimited validity or a limited validity.

6. Method according to one of claims 1 to 5, **characterised in that** the transmission (S203) of the generated activation signal (FS) to the control apparatus (5) in step c) is carried out by means of a communication interface (6) of the household appliance (1).

7. Method according to claim 6, **characterised in that** the communication interface (6) comprises a radio module, which is coupled to the control apparatus (5) for transmitting data between the household appliance (1) and the external device (7).

8. Method according to claim 6, **characterised in that** the communication interface (6) comprises a network module, which is coupled to the control apparatus (5), wherein the activation signal (FS) is transmitted to a server by means of the external device (7) and the household appliance (1) receives the activation signal (FS) from the server by means of the network module.

9. Method according to one of claims 1 to 8, **characterised in that** the external device (7) comprises a mobile terminal of a user, wherein the processing of the detected item of activation information (FI) and the adjustment of the at least one property (4) are carried out by the user by means of the processing unit (10) running on the mobile terminal and embodied as an application.

10. Method according to one of claims 1 to 9, **characterised in that** the item of activation information (FI) comprises a two-dimensional code, in particular a Quick Response code.

11. Method according to one of claims 2 to 10, **characterised in that** the camera (8) is used as the optical sensor (8) for detecting the object (O), wherein the object (O) is identified by means of object recognition and the activation signal (FS) is generated as a function of the detected and identified object (O).

12. Computer program product, which triggers the implementation of the method according to one of claims 1 to 11 on a program-controlled device.

13. Device (7) for operating a household appliance (1), which has a display device (2) with at least one display element (3) comprising at least one adjustable property (4) and a control apparatus (5) for actuating the display device (2), wherein the device (7) is external to the household appliance (1), and **characterised in that** the device (7) comprises:
A detection unit (9) for detecting an item of activation information (FI) from an object (O) by means of an optical sensor (8) of the external device (7),
A processing unit (10) for processing the detected item of activation information (FI) and for generating an activation signal (FS), and
A transmission unit (11) for transmitting the generated activation signal (FS) to the control apparatus (5) for activating an adjustment of the at least one property (4) of the display element (2).

14. System (12) with a household appliance (1) and a device (7), which is external to the household appliance (1), according to claim 13.

15. System according to claim 14, wherein the system comprises a plurality H of household appliances (1), where H ≥ 2, wherein the respective control apparatus (5) of the respective household appliance (1) of the plurality is designed to adjust the at least one property (4) of the display element (3) of the plurality of household appliances (1) by means of the transmitted activation signal (FS) such that the adjusted properties (4) of the display elements (3) are identical.

## Revendications

1. Procédé de fonctionnement d'un appareil électroménager (1) comprenant un dispositif d'affichage (2) comportant au moins un élément d'affichage (3) comprenant au moins une propriété réglable (4), et un dispositif de commande (5) pour commander le dispositif d'affichage (2), **caractérisé par** les étapes suivantes :
a) détection (S201) d'une information d'activation (FI) d'un objet (O) au moyen d'un capteur optique (8) d'un dispositif externe (7),
b) traitement (S202) de l'information d'activation (FI) détectée au moyen d'une unité de traitement (10) du dispositif externe (7) pour générer un signal d'activation (FS), et
c) transmission (S203) du signal d'activation (FS) généré au dispositif de commande (5) pour activer un réglage de l'au moins une propriété (4) de l'élément d'affichage (3).

2. Procédé selon la revendication 1, **caractérisé en ce qu'**une caméra (8) est utilisée à titre de capteur optique (8) pour détecter l'information d'activation (FI), dans lequel l'information d'activation (FI) est disposée sur l'objet (O) ou sur un emballage de l'objet (O).

3. Procédé selon la revendication 1 ou 2, **caractérisé en ce que** la propriété réglable (4) de l'élément d'affichage (3) comprend un réglage d'au moins un ton de couleur, d'au moins une saturation de couleur et/ou d'au moins une brillance de couleur et/ou le réglage d'un univers de thèmes de couleur prédéterminé et/ou le réglage d'au moins un symbole, qui sont représentés dans l'élément d'affichage (3).

4. Procédé selon l'une des revendications 1 à 3, **caractérisé en ce que** le signal d'activation généré (FS) est utilisé pour une activation initiale ou pour une activation répétée du réglage ou pour le réglage de l'au moins une propriété (4) de l'élément d'affichage (3).

5. Procédé selon l'une des revendications 1 à 4, **caractérisé en ce que** le signal d'activation (FS) généré a une validité déterminée, la validité déterminée étant une validité illimitée ou une validité limitée.

6. Procédé selon l'une des revendications 1 à 5, **caractérisé en ce que** la transmission (S203) du signal d'activation (FS) généré au dispositif de commande (5) dans l'étape c) est effectuée au moyen d'une interface de communication (6) de l'appareil électroménager (1).

7. Procédé selon la revendication 6, **caractérisé en ce que** l'interface de communication (6) comprend un module radio, qui est couplé au dispositif de commande (5) pour transmettre des données entre l'appareil électroménager (1) et le dispositif externe (7).

8. Procédé selon la revendication 6, **caractérisé en ce que** l'interface de communication (6) comprend un module de réseau, qui est couplé au dispositif de commande (5), dans lequel le signal d'activation (FS) est transmis à un serveur et l'appareil électroménager (1) reçoit le signal d'activation (FS) depuis le serveur au moyen du module de réseau.

9. Procédé selon l'une des revendications 1 à 8, **caractérisé en ce que** le dispositif externe (7) comprend un terminal mobile d'un utilisateur, dans lequel le traitement de l'information d'activation (FI) détectée et le réglage de l'au moins une propriété (4) par l'utilisateur sont effectués au moyen de l'unité de traitement (10) courante sur le terminal mobile et configurée sous forme d'une application.

10. Procédé selon l'une des revendications 1 à 9, **caractérisé en ce que** l'information d'activation (FI) comprend un code à deux dimensions, en particulier un code Quick Response.

11. Procédé selon l'une des revendications 2 à 10, **caractérisé en ce que** la caméra (8) est utilisée à titre de capteur optique (8) pour détecter l'objet (O), dans lequel l'objet (O) est identifié au moyen d'une reconnaissance d'objets et le signal d'activation (FS) est généré en fonction de l'objet (O) détecté et identifié.

12. Produit de programme informatique, qui implémente l'exécution du procédé selon l'une des revendications 1 à 11 sur un dispositif commandé par programme.

13. Dispositif (7) pour faire fonctionner un appareil électroménager (1), qui comprend un dispositif d'affichage (2) comportant au moins un élément d'affichage (3) comprenant au moins une propriété réglable (4), et un dispositif de commande (5) pour commander le dispositif d'affichage (2),
dans lequel le dispositif (7) est externe à l'appareil électroménager (1), et
**caractérisé en ce que** le dispositif (7) comprend :
une unité de détection (9) pour détecter une information d'activation (FI) d'un objet (O) au moyen d'un capteur optique (8) du dispositif externe (7),
une unité de traitement (10) pour traiter l'information d'activation (FI) détectée et pour générer un signal d'activation (FS), et
une unité de transmission (11) pour transmettre le signal d'activation (FS) généré au dispositif de commande (5) afin d'activer un réglage de l'au moins une propriété (4) de l'élément d'affichage (2).

14. Système (12) comprenant un appareil électroménager (1) et un dispositif externe (7) à l'appareil électroménager (1) selon la revendication 13.

15. Système selon la revendication 14, dans lequel le système comprend une pluralité H d'appareils électroménagers (1), où H ≥ 2, dans lequel le dispositif de commande respectif (5) de l'appareil électroménager respectif (1) de la pluralité est configuré de manière à régler l'au moins une propriété (4) de l'élément d'affichage (3) de la pluralité des appareils électroménagers (1) au moyen du signal d'activation (FS) transmis de telle sorte que les propriétés réglées (4) des éléments d'affichage (3) soient identiques.
